# EUROPEAN PATENT APPLICATION

(11) **EP 0 928 077 A2**
(43) Date of publication of application: **07.07.1999**
(21) Application number: 98403023.9
(22) Date of filing: 03.12.1998
(51) Int. Cl.: H04B 7/26

(54) **Method for increasing the range of a radiocommunications unit and unit for carrying out the method**

(30) Priority: 30.12.1997 ES 9702725
(71) Applicant: ALCATEL, 75008 Paris (FR)
(72) Inventor: Alonso Borrego, Lorenzo, 28039 Madrid (ES)
(74) Representative: Feray, Valérie

(57) **Abstract**

The present invention refers to a method for increasing the range between a first unit and a second unit, said units interchanging data according to a Time Division Duplex (TDD) mode. The method is characterised in that it comprises the following stages:
- generation, in said second unit, of a first operating rate clock signal (CK_{L}) for the circuits employed in frame synchronisation at the air interface, with a frequency lower than a reference frequency, between a transmitting time slot and a following receiving time slot in the successive TDD frames; and
- generation, in said second unit, of a second operating rate clock signal (CK_{H}) for the circuits employed in frame synchronisation at the air interface, with a frequency higher than said reference frequency, between a receiving time slot and a following transmitting time slot in the successive TDD frames.

## Description

### OBJECT OF THE INVENTION

The present invention refers to a method for increasing the range of a radiocommunications unit in a radiocommunications network. For example, the unit is a mobile terminal of a radiocommunications system with the mobiles employing an access mode of the Time Division Duplex type as it is defined in the DECT standard.

### STATE OF THE ART

With reference to figure 1, the international patent application WO/95-4662, incorporated in this application by reference, describes a procedure for the alignment of bursts as follows. During a phase of acquiring its slot synchronisation, a terminal 2 transmits synchronising bursts. The terminal 2 transmits a first burst with respect to a timing reference received from the base station 1. In the event of not receiving a response to this first burst from the base station 1 within a pre-established period of time, the terminal 2 transmits a following burst with a transmitting time brought forward with respect to the first burst. In the event of not receiving a response to this following burst from the base station within a pre-established period of time, the terminal transmits an another following burst with a transmitting time brought forward with respect to said following burst.

Thus, in this reiterative manner, the terminal 2 brings forward the respective transmitting times of its bursts with respect to the timing reference received from the base station 1 until it achieves correct synchronisation with the base station 1 which occurs with the reception of a response burst from the base station 1 that coincides with a time window defined by the terminal 2.

The limit to how far the terminal can bring forward its bursts is defined by the guard time between two consecutive time slots of the frame. When the term "bring forward" is used in the previous paragraphs, it has the following meaning: if T defines the duration of a frame, the first burst is transmitted at time t = 0, the following frame at time t = T - ε, the another following frame at time t = (2T - 2ε), etc.

The state of the art as defined above implies a limitation to the range between the base station and the terminal independently of the transmitted signal power. This range is defined as a function of the guard time that separates two successive time slots. If the terminal cannot bring its transmission of bursts further forward than is permitted by the guard time, it cannot acquire the synchronisation from a base station that is located at too long distance, because the terminal is never going to receive a response from the base station that coincides with its time window for reception. A solution would be to design new circuits to allow the transmission of bursts by the terminal to be brought further forward. This solution is not feasible because it requires a major change in the circuits already employed.

### CHARACTERISATION OF THE INVENTION

The present invention overcomes the drawbacks above mentioned by providing a method for increasing the range between a first unit and a second unit, as well as a unit for carrying out the method, which requires only a very small change in the circuits employed.

Consequently, a method for increasing the range between a first unit and a second unit, said units interchanging data according to a Time Division Duplex (TDD) mode, is characterised in that it comprises the following stages:
- generation, in said second unit, of a first operating rate clock signal for the circuits employed in frame synchronisation at the air interface, with a frequency lower than a reference frequency, between a transmitting time slot and a following receiving time slot in the successive TDD frames; and
- generation, in said second unit, of a second operating rate clock signal for the circuits employed in frame synchronisation at the air interface, with a frequency higher than said reference frequency, between a receiving time slot and a following transmitting time slot in the successive TDD frames.

The method may comprise the bringing forward by the second unit of the respective transmitting times in successive TDD frames of successive synchronisation acquisition bursts until reception of a response burst transmitted by the first unit that coincides with a time window defined by the second unit.

A unit exchanging data according to a Time Division Duplex (TDD) mode with another unit is characterised in that it comprises:
- means for clocking at the operating rate the circuits employed in frame synchronisation at the air interface, with a first clock signal which has a frequency lower than a reference frequency, between a transmitting time slot and a following receiving time slot in the successive TDD frames; and
- means for clocking at the operating rate said circuits employed in frame synchronisation at the air interface, with a second clock signal which has a frequency higher than a reference frequency, between a receiving time slot and a following transmitting time slot in the successive TDD frames.

### BRIEF DESCRIPTION OF THE FIGURES

A more detailed explanation of the present invention is provided in the following description, based on the figures attached, in which:
- figure 1, which has already been mentioned, shows two units exchanging data in accordance with a Time Division Duplex (TDD) mode;
- figure 2 shows a frame format in the state of the art according to a Time Division Duplex (TDD) mode;
- figure 3 shows a frame format according to the invention, as is seen from a unit of figure 1; and
- figure 4 shows a block diagram of some circuits of a unit according to the invention.

### DESCRIPTION OF THE INVENTION

By way of example, the present invention is described within the framework of a DECT radiocommunications system in accordance with the standards of the European body E.T.S.I., though it could apply to any system in which the exchange of data between two units uses a Time Division Duplex mode.

The method of the invention is described with respect to a first unit 1 and a second unit 2.

With reference to figure 2, a frame format in Time Division Duplex (TDD) mode consists successively and alternately of a reception time segment **Rx** including N = 12 receiving time slots and a transmission time segment **Tx** including N = 12 transmitting time slots. A communication between the first unit **1** and the second unit **2** is established making use of one of the N = 12 receiving time slots and one of the N = 12 transmitting time slots. A transmission time segment **Tx** for the first unit **1** corresponds to a reception time segment **Rx** for the second unit **2** except for a small difference in time which is a function of the distance between the two units **1** and **2**. A reception time segment **Rx** for the first unit **1** corresponds to a transmission time segment **Tx** for the second unit **2** except for said small time difference which is a function of the distance between the two units **1** and **2**. According to the state of the art, if unit **2** is situated at a considerable distance from unit **1**, unit **2** cannot be synchronised with unit **1** if the small difference in time, a function of the distance between the two units **1** and **2**, is greater than the guard time between two successive time slots of the frame.

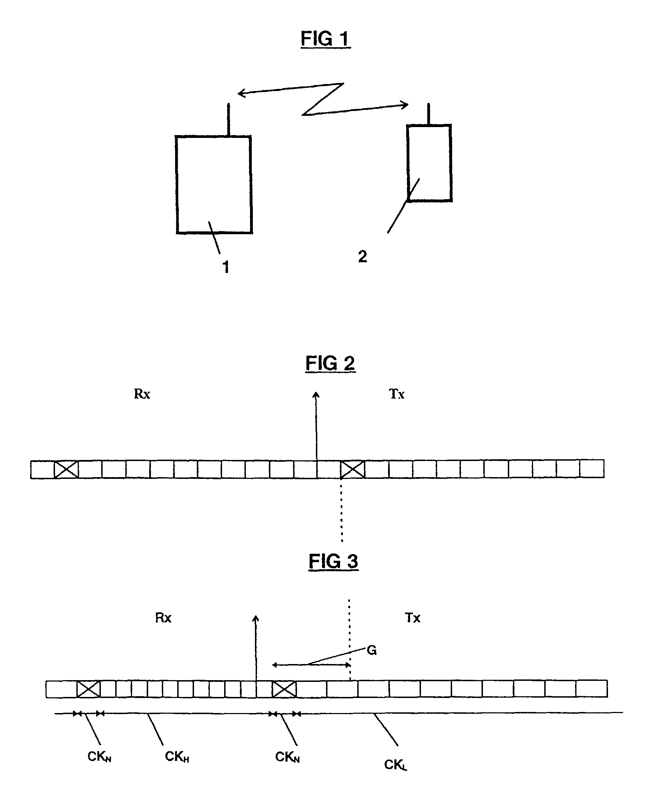

In figure 3 is shown the TDD frame of figure 2 as seen from unit **2** when the method in accordance with the present invention is applied. According to this method, the following stages are foreseen:
- generation, in unit **2**, of a first operating rate clock signal **CK**_{**L**} for the circuits employed in frame synchronisation at the air interface, with a frequency lower than a reference frequency, between a transmitting time slot and a following receiving time slot in the -successive TDD frames; and
- generation, in this unit **2**, of a second operating rate clock signal **CK**_{**H**} for the circuits employed in frame synchronisation at the air interface, with a frequency higher than said reference frequency, between a receiving time slot and a following transmitting time slot in the successive TDD frames.

As seen from unit **2**, the duration of the frame obtained with the generation of these different clock signals must have exactly the same duration as the duration of the frame as is defined for the system. This means that the two clock signals **CK**_{**L**} and **CK**_{**H**} must be applied in a compensatory manner.

The reference frequency **CK**_{**N**} is the frequency applied according to the state of the art to the digital circuits to obtain the synchronisation operating rate.

The term "operating rate" in this description refers to the operating rate of the circuits employed in frame synchronisation at the air interface.

With this method it results that unit **2** uses the same circuits for counting, synchronising, etc. as in the state of the art without any change, and it is only necessary to modify the operating rate clock signal of these circuits.

The letter G in figure 3 shows in a very exaggerated manner the gain in forwarding time which can be applied according to the invention for transmitting synchronising bursts.

The generation of the first clock signal **CK**_{**L**}, may be applied only during a part of the time between a transmitting time slot and a following receiving time slot in the successive TDD frames, and the generation of the second clock signal **CK**_{**H**}, may be applied only during a part of the time between a receiving time slot and a following transmitting time slot in the successive TDD frames. The expression "between a transmitting/receiving time slot and a following receiving/transmitting time slot" covers the embodiments according to which the signals **CK**_{**L**} / **CK**_{**H**} are generated only during a part of the total time separating a transmitting/receiving time slot and a following receiving/transmitting time slot. For example, these **CK**_{**L**} and **CK**_{**H**} signals can be applied only during two respective time slots.

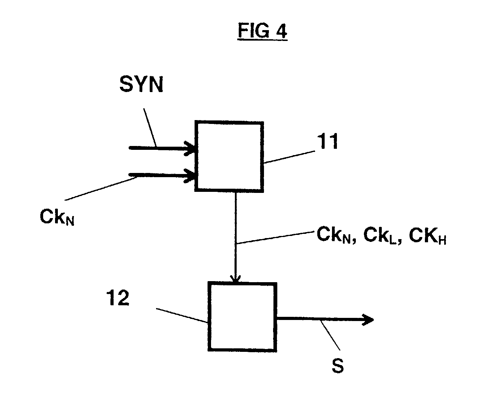

Figure 4 shows a block diagram of some circuits of unit **2** according to the invention. Unit **2** comprises a control circuit **11** and frame synchronisation circuits **12**. In figure 4 only the digital circuits necessary for the implementation of the invention are shown. In practice, these circuits work in combination with HF radio circuits, voice processing circuits, etc., as defined in radiocommunications systems, for example of the DECT type.

The control circuit **11** receives a timing reference signal **SYN** from a remote unit, or first unit **1**. On the other hand, the control circuit **11** also receives a reference clock signal **CK**_{**N**}. The timing reference **SYN**, except for a difference in time resulting from the distance between the two units **1** and **2**, identifies a particular instant in the TDD frame. The control circuit **11** provides the frequency rate for the circuits **12** used in frame synchronisation at the air interface, with a first clock signal **CK**_{**L**} which has a lower frequency than the reference frequency **CK**_{**N**}, between a transmitting time slot and a following receiving time slot in the successive TDD frames, and provides the frequency rate for the circuits **12** used in frame synchronisation at the air interface, with a second clock signal **CK**_{**H**} which has a higher frequency than the reference frequency **CK**_{**N**}, between a receiving time slot and a following transmitting time slot in the successive TDD frames. It results thereby that the different activating signals **S** generated by the circuits **12** using essentially counters can be much more out of phase than that which permits only the guard time in the state of the art solution. For example, the second unit can bring forward much more the respective times for transmitting successive synchronisation acquisition bursts in successive TDD frames, until a response burst is received that is transmitted from the other unit and which coincides with a time window for reception defined by this second unit.

## Claims

1. Method for increasing the range of a second unit with respect to a first unit, said units exchanging data according to a Time Division Duplex (TDD) mode, **characterised in that** it comprises the following stages:
- generation, in said second unit, of a first operating rate clock signal for the circuits employed in frame synchronisation at the air interface, with a frequency lower than a reference frequency, between a transmitting time slot and a following receiving time slot in the successive TDD frames; and
- generation, in said second unit, of a second operating rate clock signal for the circuits employed in frame synchronisation at the air interface, with a frequency higher than said reference frequency, between a receiving time slot and a following transmitting time slot in the successive TDD frames.

2. Method according to claim 1, **characterised in that** it comprises the bringing forward by said second unit of the respective transmitting times in successive TDD frames of successive synchronisation acquisition bursts until reception of a response burst transmitted by said first unit which coincides with a time window defined by said second unit.

3. Unit exchanging data according to a Time Division Duplex (TDD) mode with another unit, **characterised in that** it comprises:
- means for clocking at the operating rate the circuits employed in frame synchronisation at the air interface, with a first clock signal which has a frequency lower than a reference frequency, between a transmitting time slot and a following receiving time slot in the successive TDD frames; and
- means for clocking at the operating rate said circuits employed in frame synchronisation at the air interface, with a second clock signal which has a frequency higher than a reference frequency, between a receiving time slot and a following transmitting time slot in the successive TDD frames.

4. Unit according to claim 2, **characterised in that** said unit is a terminal of a radiocommunications system of the DECT type.
